(19) Europäisches Patentamt
European Patent Office
Office européen des brevets

(11) Veröffentlichungsnummer: **0 152 587 B1**

(12) **EUROPÄISCHE PATENTSCHRIFT**

(45) Veröffentlichungstag der Patentschrift: **14.03.90**

(21) Anmeldenummer: **84115311.7**

(22) Anmeldetag: **12.12.84**

(51) Int. Cl.⁵: **F 16 K 3/02**, F 16 K 25/00, C 23 C 8/50

(54) **Werkstoffpaarung für hochbeanspruchte Maschinenelemente.**

(30) Priorität: **01.02.84 DE 3403463**

(43) Veröffentlichungstag der Anmeldung:
**28.08.85 Patentblatt 85/35**

(45) Bekanntmachung des Hinweises auf die
Patenterteilung:
**14.03.90 Patentblatt 90/11**

(84) Benannte Vertragsstaaten:
**DE FR IT**

(56) Entgegenhaltungen:
**EP-A-0 077 926
DD-A- 136 750
GB-A-2 056 505
US-A-1 814 762**

**STAHL-EISEN-LISTE, 6. Auflage, 1977, Seiten
120-121, Werkstoff-Nr. 1.6310, Verlag
Stahleisen, Düsseldorf**

(73) Patentinhaber: **Siemens Aktiengesellschaft
Wittelsbacherplatz 2
D-8000 München 2 (DE)**

(72) Erfinder: **Hofmann, Peter Jürgen, Dipl.-Ing. (FH)
Lortzingstrasse 7
D-8522 Herzogenaurach (DE)**

Courier Press, Leamington Spa, England.

**Beschreibung**

Die Erfindung betrifft eine Werkstoffpaarung für hochbeanspruchte Maschinenelemente mit Gleitreibung zwischen zwei Flächen, insbesondere für Parallelplatten-Schieber, in korrodierender Umgebung, wobei die eine Fläche von einer als Auftragsschweißung aufgebrachten Kobalt-Hartlegierung gebildet wird.

Eine derartige hoch belastbare Werkstoffpaarung ist in der DD—PS 136 750 beschrieben. Dabei besteht eine von zwei zusammenwirkenden Flächen aus einer als Auftragsschweißung aufgebrachten Kobalt-Hartlegierung. Die zweite Fläche besteht aus einem vergüteten Stahl. Dieser Stahl ist hoch legiert, hat einen hohen Chromanteil und ist nicht nitriert.

Für gleitende Teile eines Ventils ist aus der US—PS 1,814,762 eine Werkstoffpaarung bekannt, die aus einem korrosionsfesten Metall und einem vergüteten, niedrig legierten, chromarmem und nitrierten Stahl besteht. Dieser als Nitralloy bekannte Stahl hat einen Chromanteil, der größer als 0,75% ist. Er wirkt in der Werkstoffpaarung mit einem üblichen rostfreien Stahl zusammen. Eine derartige Werkstoffpaarung gewährleistet selbst bei hohen Temperaturen bereits einen relativ geringen Reibungswiderstand.

Der Erfindung lag die Aufgabe zugrunde, durch eine neuartige Werkstoffpaarung noch extremere Beanspruchungen als bisher aufnehmen zu können. Dazu zählen Flächenpressungen bis fast 500 N/mm$^2$ bei Reibgeschwindigkeiten bis ca. 0,3 m/s. Zugleich soll das Material aber auch in korrodierender Umgebung ausreichend beständig sein, insbesondere unter Wasser und in Sattdampf im Temperaturbereich zwischen Zimmertemperatur (20°C) und 300°C.

Versuche haben gezeigt, daß bisher bekannte Werkstoffpaarungen den obengenannten Anforderungen nicht genügen. Bei manchen Werkstoffpaarungen können Reibschweißungen nicht vermieden werden, wenn bei den obengenannten Flächenpressungen Reibwege von auch nur 100 mm zurückzulegen sind.

Die gestellte Aufgabe wird gemäß der Erfindung dadurch gelöst, daß die andere Fläche von einem niedrig legierten, chromarmen Stahl 20 MnMoNi 5 5 nach TÜV-Werkstoffblatt 401/3 gebildet ist, der vergütet und nitriert ist.

Die Werkstoffpaarung Kobalt-Hartlegierung gegen Nitrierschicht auf niedrig legiertem, chromarmem Stahl hat sich bezüglich der tribologischen Eigenschaften überlegen gezeigt, obwohl dies der tribologischen Regel zuwiderläuft, daß bei ungeschmierter Gleitreibung ein besonders günstiges Verhalten erzielt wird, wenn beide Reibflächen annähernd die gleiche Härte aufweisen.

Bezüglich der Ausbildung der Nitrierschicht geht man bei der Erfindung außerdem von dem üblichen Ziel ab, Chromnitride mit der damit verbundenen hohen Härte zu erzeugen. Auf dem gemäß der Erfindung verwendeten chromarmen oder vorzugsweise bis auf Verunreinigungen chromfreien Grundwerkstoff werden aber trotzdem Nitrierschichten erzeugt, deren Härte deutlich über der von Kobalt-Hartlegierungen liegt. Diese Nitrierschichten haben den Vorzug erhöhter Korrosionsbeständigkeit in den relevanten Medien.

Als chromarmer Stahl hat sich 20 MnMoNi 5 5 nach dem TÜV-Werkstoffblatt 401/3 besonders bewährt.

Ein Verfahren zur Herstellung von hochbeanspruchten Maschinenelementen mit Gleitreibung zwischen zwei Flächen, wobei auf eine Fläche als Auftragsschweißung eine Kobalt-Hartlegierung aufgebracht wird, zeichnet sich beispielsweise dadurch aus, daß auf der anderen Fläche, die aus 20 MnMoNi 5 5 gebildet wird,

1. in einer Badnitrierung in einem Natrium-Kalium-Cyanat-Karbonat-Bad bei Temperaturen von 570°C bis 590°C eine Nitrierschicht mit einer Dicke von 20µm bis 40µm erzeugt wird,

2. in einem Abkühlbad auf Hydroxid-Basis bei Temperaturen von 230°C bis 300°C die Schichtoberfläche oxidiert wird,

3. zur Glättung von Rauhigkeitsspitzen 2µm bis 3µm mit einer Polierbehandlung abgetragen werden und

4. die Schichtoberfläche zur Bildung eines Magnetit-Belages erneut oxidiert wird.

Die erfindungsgemäße Werkstoffpaarung mit dieser Behandlung hat eine Herabsetzung des Reibungskoeffizienten auf etwa 1/3 gezeigt. Schweißvorgänge an den Reibflächen, die sonst nach Beendigung der Reibbewegung eintraten, sind nicht mehr vorgekommen. Außerdem liegt als wesentliche Eigenschaft ein ausreichendes Korrosionsverhalten sowohl bei Stillstandsphasen einer Dampfleitung, d.h. bei 20°C in Wasseratmosphäre als auch bei Betriebsbedingungen (ca. 300°C in Wasser und Sattdampf) vor.

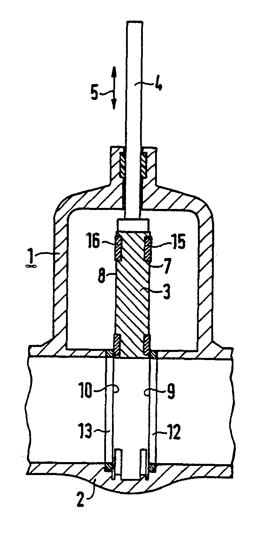

Zur näheren Erläuterung der Erfindung wird anhand der beiliegenden Zeichnung ein vereinfachtes Ausführungsbeispiel beschrieben. Dabei zeigt die Erfindung einen Schieber in einem Vertikalschnitt.

Der in der Zeichnung dargestellte Parallelschieber 1 dient als Absperrarmatur für die Frischdampfleitung eines Druckwasserreaktors. Aus diesem Grunde ist sein Gehäuse 2, das aus 20 MnMoNi 5 5 nach TÜV-Werkstoffblatt 401/3 besteht, für ca. 88 bar und ca. 300°C ausgelegt. Es hat eine Nennweite von 700 mm. Als Sperrorgan dient eine Schieberplatte 3 aus 20 MnMoNi 5 5. Sie ist mit einem Stößel 4 rechtwinklig zur Gehäuseachse bewegbar, wie durch den Pfeil 5 angedeutet ist. Dabei gleiten die Oberflächen 7 und 8 der Schieberplatte 3 auf Randflächen 9 und 10 im Inneren des Schiebergehäuses 2. Hieraus entstehen wegen der Druckkräfte in der Nähe der Schließstellung extreme Beanspruchungen, wie sie eingangs dargelegt worden sind.

Die Flächen 9 und 10 werden von Ringen 12 und 13 gebildet, die einen rechteckigen Querschnitt mit etwa 35 × 270 mm Kantenlänge und einen Innen-Durchmesser von 590 mm haben. Die Ringe 12, 13 tragen eine als Auftragsschweißung mit Stellite 6 hergestellte Schicht mit einer Schichtdicke von ca. 3—4 mm und sind im Gehäuse 2 durch eine Schweißverbindung befestigt.

Als anderer Partner der Werkstoffpaarung sind in der Schieberplatte 3 Ringe 15 und 16 aus vergüteten und nitrierten 20 MnMoNi 5 5 angeordnet, die geringfügig, zum Beispiel um 2 mm aus der Schieberplatte 3 vorstehen. Die Ringe 15, 16 wurden in ihren Abmessungen von 40 mm Dicke und 630/665 mm Durchmesser mit Werkzeugmaschinen entsprechend einer Oberflächenfeinheit von $R_t$ < 5µm hergestellt. Dann sind sie in einer Badnitrierung mit einer Nitrierschicht von etwa 30µm versehen worden, die anschließend in einem Abkühlbad an der Oberfläche oxidiert wurde. Dann wurde mit einer Polierbehandlung eine Glättung der Oberfläche vorgenommen, bei der etwa 2 bis 3µm abgetragen wurden. Schließlich wurde die Oberfläche zur Bildung eines Magnetit-Belages erneut kurzzeitig, d.h. einige Minuten bis höchstens 1/2 Stunde oxidiert. Die so behandelten Ringe 15, 16 sind dann in vorbereitete Nuten in der Schieberplatte 3 eingelegt und mit versenkten Schrauben befestigt worden.

Die erfindungsgemäße Werkstoffpaarung hat sich, wie erwähnt, bei Schiebern bewährt. Sie kommt aber auch an anderen Stellen mit hoher Belastung der eingangs genannten Art in Frage, zum Beispiel für extrem belastete Lager in korrodierender Atmosphäre sowie für hochbelastete Abstützungen, bei denen im Hinblick auf Wärmedehnungen mit gewissen Bewegungen zu rechnen ist.

## Patentansprüche

1. Werkstoffpaarung för hochbeanspruchte Maschinenelemente mit Gleitreibung zwischen zwei Flächen, insbesondere für Parallelplatten-Schieber (1) in korrodierender Umgebung, wobei die eine Fläche (9, 10) von einer als Auftragsschweißung aufgebrachten Kobalt-Hartlegierung gebildet wird, dadurch gekennzeichnet, daß die andere Fläche (7, 8) von einem niedrig legierten, chromarmen Stahl 20 MnMoNi 5 5 nach TÜV-Werkstoffblatt 401/3 gebildet ist, der vergütet und nitriert ist.

2. Verfahren zur Herstellung von hochbeanspruchten Maschinenelementen mit Gleitreibung zwischen zwei Flächen (9, 10; 7, 8) mit einer Werkstoffpaarung nach Anspruch 1, wobei auf eine Fläche (9, 10) als Auftragsschweißung eine Kobalt-Hartlegierung aufgebracht wird, dadurch gekennzeichnet, daß auf der anderen Fläche (7, 8), die zuvor aus 20 MnMoNi 5 5 gebildet wird,
1. in einer Badnitrierung in einem Natrium-Kalium-Cyanat-Karbonat-Bad bei Temperaturen von 570°C bis 590°C eine Nitrierschicht mit einer Dicke von 20µm bis 40µm erzeugt wird,
2. in einem Abkühlbad auf Hydroxid-Basis bei Temperaturen von 230°C bis 300°C die Schichtoberfläche oxidiert wird,
3. zur Glättung von Rauhigkeitsspitzen 2µm bis 3µm mit einer Polierbehandlung abgetragen werden und
4. die Schichtoberfläche zur Bildung eines Magnetit-Belages erneut oxidiert wird.

## Revendications

1. Couple de matériaux pour des éléments de machines fortement sollicités, avec une friction de glissement entre deux surfaces, notamment pour des coulisseaux à plaques parallèles (1) dans un environnement corrosif, l'une des surfaces (9, 10) étant formée d'un alliage dur au cobalt déposé sous la forme d'un rechargement par soudage, caractérisé en ce que l'autre surface (7, 8) est formée d'un acier faiblement allié, pauvre en chrome 20 MnMoNi 5 5 suivant la notice sur les matériaux 401/3 de la TÜV (Technischer Überwachungsverein) qui est amélioré par trempe et par revenu et qui est nitré.

2. Procédé de fabrication d'éléments de machines fortement sollicités, ayant une friction de glissement entre deux surfaces (9, 10; 7, 8), au moyen d'un couple de matériaux suivant la revendication 1, qui consiste à déposer sur une surface (9, 10) un alliage dur au cobalt servant de rechargement par soudage, caractérisé en ce qu'il consiste, sur l'autre surface (7, 8) qui est formée au préalable de 20 MnMoNi 5 5,
1. à produire, dans une nitruration au bain, dans un bain de cyanate-carbonate de sodium-potassium, à des températures de 570°C à 590°C, une couche de nitruration d'une épaisseur de 20µm à 40µm,
2. à oxyder la couche superficielle dans un bain de refroidissement à base d'hydroxyde, à des températures de 230°C à 300°C,
3. pour lisser les pointes de rugosité de 2µm à 3µm, à les enlever par un traitement de polissage, et
4. à oxyder la couche superficielle pour former à nouveau une couche de magnétite.

## Claims

1. Material pairing for highly-stressed machine elements with sliding friction between two surfaces, in particular for parallel plate slide valves (1) in a corrosive environment, wherein, the one surface (9, 10) is formed from a cobalt hard-alloy applied as welding deposit, characterised in that the other surface (7, 8) is formed from a low alloyed steel 20 MnMoMi 5 5, low in chromium, according to West German Technical Inspectorate Materials Sheet 401/3, said steel being annealed and nitrided.

2. Method for manufacturing highly-stressed machine elements with sliding friction between two surfaces (9, 10; 7, 8) with a material pairing according to claim 1, wherein on one surface (9, 10) a cobalt hard-alloy is applied as deposit welding, characterised in that on the other surface (7, 8), formed previously from 20 MnMoNi,
1. A nitride layer with a thickness of 20µm to 40µm is produced by bath nitriding in a sodium- calcium-cyanate-carbonate bath at temperatures of 570°C to 590°C,

2. The layer surface is oxidised in a cooling bath based on hydroxide at temperatures of 230°C to 300°C.

3. For smoothing the roughness points 2μm to 3μm are removed by polishing treatment and,

4. The layer surface is oxidised again for forming a magnetite coat.